# EUROPÄISCHE PATENTSCHRIFT

(11) **EP 1 561 562 B1**
(45) Veröffentlichungstag und Bekanntmachung des Hinweises auf die Patenterteilung: **10.09.2008**
(21) Anmeldenummer: 05100470.3
(22) Anmeldetag: 25.01.2005
(51) Int. Cl.: B29C 45/16, B29C 45/04, B29C 45/17

(54) **Spritzgiessmaschine**
Injection moulding machine
Machine à mouler par injection

(30) Priorität: 03.02.2004 DE 102004005416
(43) Veröffentlichungstag der Anmeldung: 10.08.2005
(73) Patentinhaber: Adcuram Maschinenbauholding GmbH, 80333 München (DE)
(72) Erfinder: Füller, Klaus, 19061 Schwerin (DE)
(74) Vertreter: Gosdin, Michael

(56) Entgegenhaltungen:
- EP-A- 0 895 848
- WO-A-03/013824
- US-A- 4 439 133
- US-B1- 6 613 262
- DASSOW J: "FUER ALLE FAELLE GERUESTET, TECHNOLOGIEFUEHRERSCHAFT DURCH MEHRKOMPONENTENTECHNIK" KUNSTSTOFFE, CARL HANSER VERLAG. MUNCHEN, DE, Bd. 92, September 2002 (2002-09), Seiten 105-109, XP002237523 ISSN: 0023-5563

## Beschreibung

Die Erfindung betrifft eine Spritzgießmaschine mit mindestens zwei unabhängigen Spritzeinheiten und mindestens einem Maschinenbett, wobei eine erste Spritzeinheit an einer ersten beweglichen Formaufspannplatte und die zweite Spritzeinheit an einer zweiten beweglichen Formaufspannplatte angeordnet ist, wobei beide Formaufspannplatten auf ein drehbares Mittelteil zubewegbar sind, wobei das Mittelteil aus mindestens einem feststehenden Teil und einem drehbaren Teil besteht und wobei das drehbare Teil über Mittel kraftschlüssig mit dem Maschinenbett festlegbar ist. Des weiteren betrifft die Erfindung ein Verfahren zum Drehen eines drehbaren Teils eines Mittelteils einer Spritzgießmaschine.

Spritzgießmaschinen dieser Gattung sind beispielsweise aus der US 6 613 262 und aus der EP 1 512 512 A2 bekannt. Bekannt sind weiterhin Spritzgießmaschinen mit zwei Spritzeinheiten sowie einem drehbaren Mittelteil, wobei sich das drehbare Mittelteil auf die Verbindungsholme zwischen den Spritzeinheiten abstützt. Während des Spritzgießprozesses ist das Mittelteil sowie eine Spritzeinheit auf eine zweite Spritzeinheit, die meist nicht verfahrbar ist, zubewegbar. Das verschiebbare, auf den Holmen gelagerte Mittelteil hat somit keine feste Verbindung zum Maschinenbett, auftretende Spritzdrücke können somit nur über die Lagerung oder über die auf der Gegenseite angeordnete Spritzeinheit im Maschinenbett aufgefangen werden.

Die Erfindung stellt sich daher die Aufgabe, eine Spritzgießmaschine sowie ein Verfahren mit einem drehbaren Mittelteil anzubieten, bei der auf dieses wirkende Kräfte während des Spritzgießprozesses möglichst direkt im Maschinenbett aufgenommen werden können und somit das Drehlager entlastet wird.

Die Lösung der Aufgabe ist eine Spritzgießmaschine nach Anspruch 1 und ein Verfahren, nach Anspruch 5.

Vorteilhafterweise wird der drehbare Teil des Mittelteils über Spannelemente kraftschlüssig mit dem Maschinenbett verbunden. Diese kraftschlüssige Verbindung kann beispielsweise mittels Spannelementen erfolgen, wobei das Maschinenbett auch der Grundträger der Spritzgießmaschine sein kann. Weiterbildungsgemäß ist vorgesehen, daß das Öffnen sowie das Lösen der kraftschlüssigen Verbindung über die Maschinensteuerung realisierbar ist. Dieses Lösen ist selbstverständlich erforderlich, damit das Drehen des Mittelteiles überhaupt ermöglicht wird.

Vorgesehen ist, dass zwischen dem drehbaren Teil des Mittelteils und dem Maschinenbett ein Abstand erzeugt wird. Dies geschieht logischerweise vor dem Einleiten der Drehbewegung. Dieser Spalt zwischen dem Mittelteil und dem Maschinenbett bzw. dem Grundträger erfolgt-durch Entfernen von mindestens einer Zwischenlage, die sich zwischen dem drehbaren Mittelteil und dem Maschinenbett bzw. Grundträger befindet. Als Zwischenlage zwischen dem Maschinenkörper bzw. dem Grundkörper und dem Mittelteil könnten zum Beispiel Keile angeordnet sein. Diese Zwischenlagen bzw. Keile werden vorzugsweise durch geeignete Mittel entfernt. Nach der Drehbewegung und vor der Erzeugung der erneuten kraftschlüssigen Verbindung zwischen dem drehbaren Mittelteil und dem Maschinenbett muß die zuvor entfernte Zwischenlage durch die oben genannten Hilfsmittel selbstverständlich wieder eingebracht werden.

In einer Weiterbildung wird nach Erzeugen des Abstandes zwischen dem drehbaren Teil des Mittelteils und dem Maschinenbett eine Lagerung eingebracht. Dies erfolgt zur Vermeidung von Verschleiß während der Drehbewegung. Die Last des Mittelteils wird somit während der Drehbewegung mittels eines hydrostatischen oder pneumatischen Lagers oder eines Magnetkissens aufgenommen. Wird der Spalt zwischen dem Mittelteil und dem Maschinenbett durch Entfernen von Zwischenlagen erzeugt, kann auch ein Gleitlager oder ein Wälzlager die Last des Mittelteils während der Drehbewegung aufnehmen. Gelangt ein Gleitlager zum Einsatz, so kann auf die Erzeugung des Spaltes verzichtet werden. Beim Einsatz von Gleit- oder Wälzlagern entfällt jedoch der Vorteil der Verschleißfreiheit.

Die erfindungsgemäße Spritzgießmaschine zeichnet sich weiterhin dadurch aus, daß die axiale Lage des Mittelteils nicht veränderbar ist.

Die vorgeschlagene Spritzgießmaschine sowie das vorgeschlagene Verfahren eignen sich somit bestens, Spritzdruckkräfte und weitere auftretende Kräfte nicht allein in der drehbaren Lagerung aufnehmen zu müssen. Diese Vorteile können auch beim sogenannten Spritzprägen genutzt werden. Es ist somit möglich, nach oder während des eigentlichen Spritzvorganges die jeweiligen Werkzeughälften in ihrer Lage zu verändern, beispielsweise zu öffnen oder stärker bzw. fester zu schließen oder konturbildende Teile der Werkzeughälfte zu kippen.

Durch die Drehbarkeit des Mittelteils wird es ermöglicht, jede der daran angeordneten Werkzeughälften einmal der ersten beweglichen Formaufspannplatte mit der ersten Spritzeinheit und einmal der zweiten beweglichen Formaufspannplatte mit der zweiten Spritzeinheit zuzuordnen. Es ist somit möglich, ein Kunststoffteil über zwei verschiedene Spritzeinheiten und somit auch aus zwei unterschiedlichen Materialien in einer Spritzgießmaschine zu fertigen.

Das Mittelteil ist drehbar auf einem Grundgestell gelagert, wobei die axiale Lage im Gegensatz zu den beweglichen Formaufspannplatten, an denen die Spritzeinheiten angeordnet sind, nicht verändert werden kann.

In den Zeichnungen ist ein Ausführungsbeispiel der Erfindung schematisch dargestellt, es zeigt
- Fig. 1: Mittelteil mit den beiden Formaufspannplatten
- Fig. 2: Seitenansicht des drehbaren Mittelteils
- Fig. 3: Draufsicht des Mittelteils.

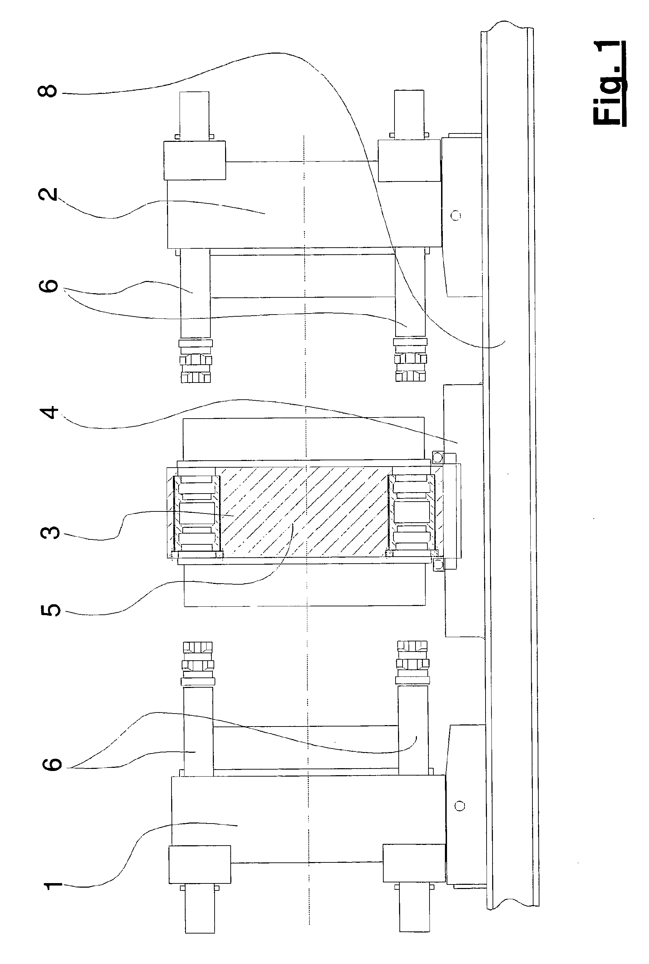

Figur 1 zeigt eine erste Formaufspannplatte 1 und eine zweite Formaufspannplatte 2, die an einem Maschinenbett bzw. Grundgestell 8 verschiebbar angeordnet sind. Das Mittelteil 3 weist einen drehbaren Teil 5 und einen festen Teil 4 auf, wobei der feste Teil 4 mit dem Maschinenbett 8 fest verbunden ist. Die beweglichen Formaufspannplatten können mittels den darin angeordneten Holmen 6 mit dem Mittelteil 3 verankert werden. Über die angedeuteten Schweißnähte am festen Mittelteil 4 wird deutlich, daß dieses in der axialen Lage nicht veränderbar ist, sondern die Formaufspannplatten mit den nicht dargestellten Spritzeinheiten auf dieses Mittelteil zubewegt werden müssen.

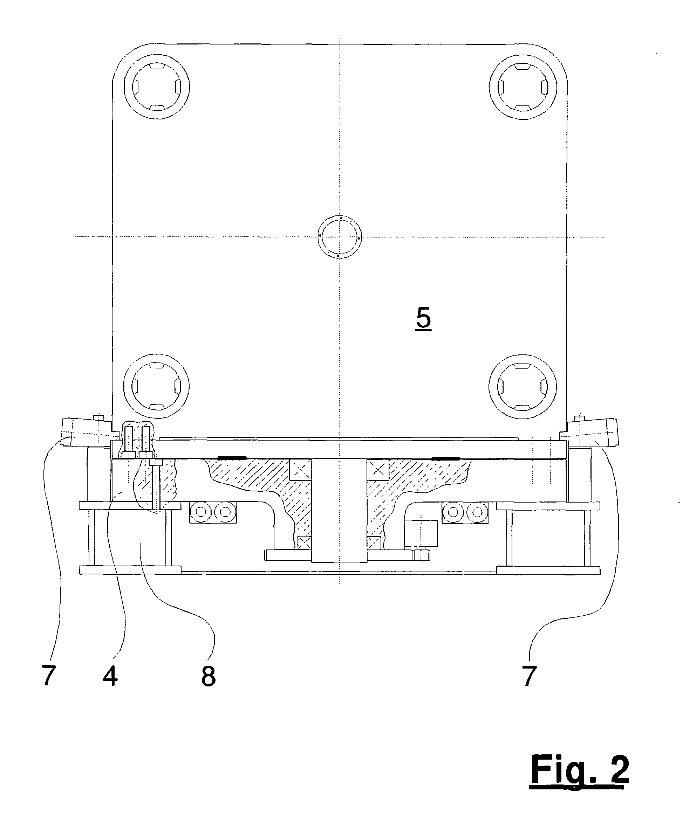

Figur 2 zeigt eine Seitenansicht auf das Mittelteil. Das Grundgestell oder Maschinenbett 8 trägt das gesamte Mittelteil 3. Der feste Teil 4 ist formschlüssig vorzugsweise durch Verschweißung mit dem Grundgestell 8 verbunden. Mittels geeigneter, nicht dargestellter Antriebe ist das drehbare Mittelteil 5 um seine Achse verdrehbar. Eine Festlegung des drehbaren Mittelteiles erfolgt über die Mittel 7. Dies sind vorzugsweise Spannelemente, die über den festen Teil des Mittelteils 4 mit dem Maschinenrahmen 8 verbunden sind und somit eine kraftschlüssige Verbindung des drehbaren Teiles 5 ermöglichen.

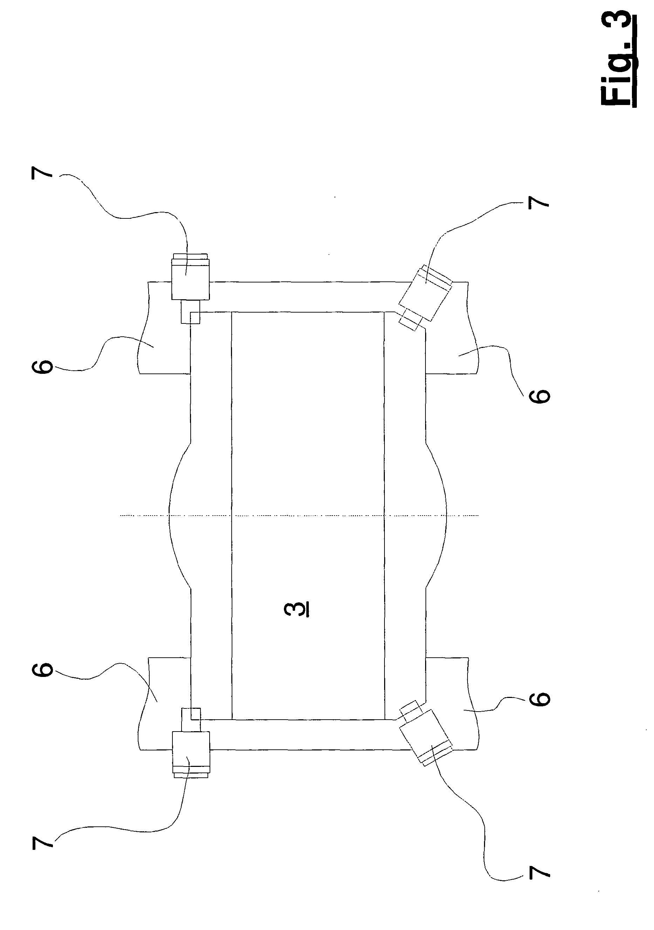

Figur 3 stellt eine Draufsicht auf das Mittelteil 3 dar. Die angedeuteten Holme 6 sind im Mittelteil 3 verankert. Die Mittel 7 zum Verspannen des drehbaren Teiles 5 sind vorzugsweise in der Nähe der Holme und in allen 4 Eckbereichen des Mittelteiles angeordnet. Die Spannelemente bzw. Mittel zum Festlegen des drehbaren Teiles können auch schräg angeordnet sein, wie dies in der linken Hälfte dargestellt ist. Somit wird auch ein freies Drehen des Mittelteiles ermöglicht.

### Bezugszeichenliste:

- 1: erste bewegliche Formaufspannplatte
- 2: zweite bewegliche Formaufspannplatte
- 3: Mittelteil
- 4: feststehender Teil von 3
- 5: drehbarer Teil von 3
- 6: Holm
- 7: Mittel zum Festlegen von 5

## Patentansprüche

1. Spritzgießmaschine mit mindestens zwei unabhängigen Spritzeinheiten und mindestens einem Maschinenbett (8),
wobei eine erste Spritzeinheit an einer ersten beweglichen Formaufspannplatte (1) und
die zweite Spritzeinheit an einer zweiten beweglichen Formaufspannplatte (2) angeordnet ist,
wobei beide Formaufspannplatten (1, 2) auf ein drehbares Mittelteil (3) zubewegbar sind,
wobei das Mittelteil (3) aus mindestens einem feststehenden Teil (4) und einem drehbaren Teil (5) besteht und
wobei das drehbare Teil (5) über Mittel (7) kraftschlüssig mit dem Maschinenbett (8) festlegbar ist,
**dadurch gekennzeichnet, dass** zwischen dem drehbaren Teil (5) und dem maschinenbett (8) ein Abstand durch Entfernen einer Zwischenlage erzeugt werden kann.

2. Spritzgießmaschine nach Anspruch 1, **dadurch gekennzeichnet, dass** der drehbare Teil (5) des Mittelteils (3) über Spannelemente (7) kraftschlüssig mit dem Maschinenbett (8) verbindbar ist.

3. Spritzgießmaschine nach Anspruch 2, **dadurch gekennzeichnet, dass** das Öffnen sowie das Lösen der kraftschlüssigen Verbindung über die Maschinensteuerung realisierbar ist.

4. Spritzgießmaschine nach einem der vorigen Ansprüche, **dadurch gekennzeichnet, dass** die axiale Lage des Mittelteils (3) nicht veränderbar ist.

5. Verfahren zum Drehen eines drehbaren Teils (5) eines Mittelteils (3) einer Spritzgießmaschine nach einem der Ansprüche 1-4 mit mindestens zwei unabhängigen Spritzeinheiten und mindestens einem Maschinenbett (8),
**dadurch gekennzeichnet, dass**
vor Einleiten der Drehbewegung eine kraftschlüssige Verbindung zwischen dem drehbaren Teil (5) des Mittelteils (3) und dem Maschinenbett (8) gelöst wird und
eine Zwischenlage zwischen dem drehbaren Teil (5) des Mittelteils (3) und dem Maschinenbett (8) entfernt wird.

6. Verfahren nach Anspruch 7, **dadurch gekennzeichnet, dass** die Last des Mittelteils (3) bei der Drehbewegung mittels eines hydrostatischen oder pneumatischen Lagers oder eines Magnetkissens aufgenommen wird.

## Claims

1. Injection moulding machine with at lest two independent injection units and at least one machine base (8),
wherein a first injection unit is arranged at a first movable tool plate (1) and
the second injection unit is arranged at a second movable tool plate (2),
wherein both tool plates (1, 2) can be moved toward a pivotable centre part (3),
wherein the centre part (3) consists of at least one stationary part (4) and a pivotable part (5) and
wherein the pivotable part (5) is force-fitted fixable with the machine base (8) by means (7),
**characterized in that**
between the pivotable part (5) and machine base (8) a distance can be created by removing of an intermediate layer.

2. Injection moulding machine according to claim 1, **characterized in that** the pivotable part (5) of the centre part (3) is force-fitted connectable with the machine base (8) by clamping elements (7).

3. Injection moulding machine according to claim 2, **characterized in that** the releasing and the locking of the force-fitted connection can be realised by the machine control.

4. Injection moulding machine according to one of the preceding claims, **characterized in that** the axial position of the centre part (3) is not changeable.

5. Method for rotating of a pivotable part (5) of a centre part (3) of an injection moulding machine according to one of claims 1 till 4 with at least two independent injection units and at least one machine base (8),
**characterized in that**
before the start of the rotary motion a force-fitted connection between the pivotable part (5) of the centre part (3) and the machine base (8) is released and
an intermediate layer between the pivotable part (5) of the centre part (3) and the machine base (8) is removed.

6. Method according to claim 5, **characterized in that** the load of the centre part (3) during the rotary motion is carried by a hydrostatic or pneumatic bearing or by a magnetic bearing.

## Revendications

1. Machine à mouler par injection comprenant au moins deux unités d'injection indépendantes et au moins un banc de machine (8),
une première unité d'injection étant disposée sur une première plaque mobile de serrage de moule (1) et
la deuxième unité d'injection étant disposée sur une deuxième plaque mobile de serrage de moule (2),
les deux plaques de serrage de moule (1, 2) pouvant être rapprochées vers une partie centrale rotative (3),
la partie centrale (3) se composant d'au moins une partie fixe (4) et d'une partie rotative (5) et
la partie rotative (5) pouvant être fixée par engagement par force au banc de machine (8) par le biais de moyens (7),
**caractérisée en ce que**
l'on peut produire un espacement entre la partie rotative (5) et le banc de machine (8) en enlevant une couche intermédiaire.

2. Machine à mouler par injection selon la revendication 1, **caractérisée en ce que** la partie rotative (5) de la partie centrale (3) peut être connectée par engagement par force au banc de machine (8) par le biais d'éléments de serrage (7).

3. Machine à mouler par injection selon la revendication 2, **caractérisée en ce que** l'ouverture ainsi que la fermeture de la connexion par engagement par force peuvent s'effectuer par le biais de la commande de machine.

4. Machine à mouler par injection selon l'une quelconque des revendications précédentes, **caractérisée en ce que** la position axiale de la partie centrale (3) ne peut pas être modifiée.

5. Procédé pour faire tourner une partie rotative (5) d'une partie centrale (3) d'une machine à mouler par injection selon l'une quelconque des revendications 1 à 4, comprenant au moins deux unités d'injection indépendantes et au moins un banc de machine (8),
**caractérisé en ce**
**qu'**avant le début du mouvement de rotation, une connexion par engagement par force entre la partie rotative (5) de la partie centrale (3) et le banc de machine (8) est desserrée, et
une couche intermédiaire entre la partie rotative (5) de la partie centrale (3) et le banc de machine (8) est enlevée.

6. Procédé selon la revendication 5, **caractérisé en ce que** la charge de la partie centrale (3) lors du mouvement de rotation est reçue au moyen d'un palier hydrostatique ou pneumatique ou d'un coussin magnétique.
